# EUROPÄISCHE PATENTSCHRIFT

(11) **EP 3 042 815 B1**
(45) Veröffentlichungstag und Bekanntmachung des Hinweises auf die Patenterteilung: **11.09.2019**
(21) Anmeldenummer: 15199579.2
(22) Anmeldetag: 11.12.2015
(51) Int. Cl.: B60T 13/74, B60T 17/22, F16D 59/02, F16D 55/28

(54) **FAHRANTRIEB EINES FLURFÖRDERZEUGS MIT EINEM ELEKTROMOTOR UND MIT EINER FEDERSPEICHERBREMSEINRICHTUNG**
DRIVE OF AN INDUSTRIAL TRUCK WITH AN ELECTRIC MOTOR AND A SPRING-LOADED BRAKE DEVICE
ENTRAINEMENT D'UN CHARIOT DE MANUTENTION EQUIPE D'UN MOTEUR ELECTRIQUE ET D'UN DISPOSITIF DE FREINAGE A RESSORT

(30) Priorität: 08.01.2015 DE 102015100178
(43) Veröffentlichungstag der Anmeldung: 13.07.2016
(73) Patentinhaber: Linde Material Handling GmbH, 63743 Aschaffenburg (DE)
(72) Erfinder: Pedelucq, Julien, 83530 Availles-en-Chatellerault (FR)
(74) Vertreter: Patentship Patentanwaltsgesellschaft mbH

(56) Entgegenhaltungen:
- EP-A1- 2 006 563
- DE-A1- 3 424 595
- DE-A1-102006 004 065
- DE-A1-102011 004 813
- DE-U1- 8 519 223
- GB-A- 1 370 142

## Beschreibung

Die Erfindung betrifft einen Fahrantrieb eines Flurförderzeugs mit einem Elektromotor, der eine Abtriebswelle aufweist, und mit einer Federspeicherbremseinrichtung, die auf die Abtriebswelle des Elektromotors wirkt, wobei die Federspeicherbremseinrichtung einen mit der Abtriebswelle drehfest verbundenen Bremsrotor und eine axial verschiebbare Druckplatte aufweist, wobei die Druckplatte von einer Federeinrichtung in Richtung einer Bremsstellung der Federspeicherbremseinrichtung und von einer der Federeinrichtung entgegenwirkenden Lüfteinrichtung in Richtung einer Lösestellung der Federspeicherbremseinrichtung beaufschlagt ist, wobei die Federspeicherbremseinrichtung ein Bremsgehäuse aufweist, wobei in dem Bremsgehäuse die Druckplatte und der Bremsrotor angeordnet sind, wobei das Bremsgehäuse zur Aufnahme der Druckplatte und des Bremsrotors einen Aufnahmeraum aufweist, in dem die Druckplatte und der Bremsrotor angeordnet und eingebaut sind.

Bei Flurförderzeugen werden elektrische Fahrantriebe eingesetzt, die einen Elektromotor als Fahrmotor aufweisen. Um das Flurförderzeug im Stillstand halten zu können, werden Federspeicherbremsen als Feststellbremsen eingesetzt. Derartige Federspeicherbremsen stehen mit der Abtriebswelle des Elektromotors in Wirkverbindung und arretieren in der Bremsstellung die Abtriebswelle.

Hierzu ist es bekannt, eine Federspeicherbremseinrichtung an das Motorgehäuse des Fahrantriebs anzubauen, beispielsweise an der Oberseite des Motorgehäuses, derart, dass ein mit der Abtriebswelle in Wirkverbindung stehender Bremsrotor, beispielsweise eine Bremsscheibe, zwischen dem Motorgehäuse und der Federspeicherbremseinrichtung angeordnet ist und in der Bremsstellung von Außen gegen das Motorgehäuse des Fahrantriebs gedrückt wird. Bei einem derartigen Fahrantrieb ist jedoch nachteilig, dass in einem Bremsgehäuse der Federspeicherbremseinrichtung nur die Federeinrichtung und die Lüfteinrichtung angeordnet ist und der Bremsrotor zwischen dem Motorgehäuse und dem Bremsgehäuse angeordnet ist. Zudem weist die Federspeichereinrichtung aufgrund des zwischen dem Motogehäuse und dem Bremsgehäuses angeordneten Bremsrotors einen hohen Bauraumbedarf auf, der zu einem entsprechend hohen Bauraumbedarf des Fahrantriebs führt. Zudem ergibt sich bei einem derartigen Fahrantrieb bei einem Verschleiß des Bremsrotors ein hoher Wartungsaufwand für das Nachstellen der Federspeicherbremse, da mehrere Schrauben, in der Regel drei Schrauben, mittels denen das Bremsgehäuse der Federspeicherbremseinrichtung an dem Motorgehäuse des Fahrantriebs befestigt ist, gleichzeitig nachgestellt werden müssen.

Ein gattungsgemäßer Fahrantrieb eines Flurförderzeugs ist aus der DE 10 2011 004 813 A1 bekannt. Ein Bremsrotor der Federspeicherbremse wird mittels einer Druckplatte in der Bremsstellung gegen eine feste Stirnseite eines Bremsgehäuses der Federspeicherbremse gedrückt.

Die DE 10 2006 004 065 A1 offenbart eine Federspeicherbremse für ein Flurförderzeug, bei der das Bremsgehäuse der Federspeicherbremse an einer fahrzeugfesten Platte angebracht ist. Ein Bremsrotor und eine Druckplatte der Federspeicherbremse sind zwischen der fahrzeugfesten Platte und dem Bremsgehäuse angeordnet. Der Bremsrotor wird in der Bremsstellung mittels der Druckplatte auf die fahrzeugfeste Platte gedrückt. Die Befestigung des Bremsgehäuses an der fahrzeugfesten Platte erfolgt mittels mehrerer Bolzen, mit denen auch der Abstand zwischen der fahrzeugfesten Platte und dem Bremsgehäuse eingestellt werden kann. Bei der DE 10 2006 004 065 A1 wird somit das gesamte Bremsgehäuse relativ zu der fahrzeugfesten Platte verstellt, um den Luftspalt der Federspeicherbremse einzustellen.

Die EP 2 006 563 A1 offenbart eine Federspeicherbremse für ein Flurförderzeug, bei der ein Bremsrotor und zwei Druckplatten in einem Bremsgehäuse angeordnet sind. Das Bremsgehäuse weist eine fest am Bremsgehäuse angeordnete Druckplatte auf, gegen den der Bremsrotor in der Bremsstellung der Federspeicherbremse gedrückt wird.

Die DE 34 24 595 A1 offenbart eine elektrisch lüftbare Federspeicherbremse, bei der das Bremsgehäuse der Federspeicherbremse an einem ortsfesten Maschinenteil angebracht ist. Ein Bremsrotor und eine Druckplatte der Federspeicherbremse sind zwischen dem ortsfesten Maschinenteil und dem Bremsgehäuse angeordnet. Der Bremsrotor wird in der Bremsstellung mittels der Druckplatte auf das ortsfeste Maschinenteil gedrückt. Das Bremsgehäuse ist mittels Einstellschrauben an dem ortsfesten Maschinenteil befestigt, so dass der Luftspalt zwischen Bremsgehäuse und Druckplatte eingestellt werden kann. Bei der DE 34 24 595 A1 wird somit das gesamte Bremsgehäuse relativ zu dem ortsfesten Maschinenteil verstellt, um den Luftspalt der Federspeicherbremse einzustellen.

Die DE 85 19 223 U1 offenbart eine elektrisch lüftbare Federspeicherbremse, bei der der Bremsrotor mittels einer Druckplatte an die Stirnseite eines Lagerschildes eines Elektromotors gedrückt wird. Die Druckplatte und der Bremsrotor sind hierbei in einem Freiraum zwischen dem Lagerschild und einem ein Bremsgehäuse bildenden Magnetkörper der Federspeicherbremse angeordnet. Der Magnetkörper ist mittels Einstellschrauben am Lagerschild befestigt.

Aus der GB 1 370 142 A ist eine hydraulisch betätigte Scheibenbremse und eine mechanisch betätigte Trommelbremse bekannt, die beide in ein Rad eines Flurförderzeugs eingebaut sind.

Aus der DE 101 03 969 A1 ist ein Fahrantrieb bekannt, bei dem die Federeinrichtung und die als Spule ausgebildete Lüfteinrichtung der Federspeicherbremseinrichtung in dem Motorgehäuse des Fahrantriebs angeordnet sind. Bei dem aus der DE 101 03 969 A1 bekannten Fahrantrieb umfasst die Federspeicherbremseinrichtung einen mit der Abtriebswelle des Elektromotors drehfest und axialfest verbundenen Bremskörper, gegen den eine von der Federeinrichtung beaufschlagte Druckplatte gedrückt wird. In der Bremsstellung der Federspeichereinrichtung erzeugt die Federeinrichtung eine als Druckkraft ausgebildete Bremskraft, mittels der die Druckplatte an den Bremsrotor angedrückt wird. Da der Bremsrotor, um die Abtriebswelle in der Bremsstellung der Federspeicherbremseinrichtung arretieren zu können, an der Abtriebswelle axialfest befestigt sein muss, ist bei dem aus der DE 101 03 969 A1 bekannten Fahrantrieb nachteilig, dass eine Lagereinrichtung der Abtriebswelle, mittels der die Abtriebswelle des Elektromotors im Motorgehäuse drehbar gelagert ist, in der Bremsstellung der Federspeicherbremseinrichtung die Bremskraft am Motorgehäuse abstützten muss, so dass sich ein entsprechend hoher Bauaufwand für die Lagereinrichtung der Abtriebswelle ergibt.

Der vorliegenden Erfindung liegt die Aufgabe zugrunde, einen Fahrantrieb zur Verfügung zu stellen, bei dem die Federspeicherbremseinrichtung einen geringen Wartungsaufwand verursacht.

Diese Aufgabe wird erfindungsgemäß dadurch gelöst, dass das Bremsgehäuse mit einem einstellbaren Bremsstator der Federspeicherbremseinrichtung versehen ist, gegen den der Bremsrotor mittels der axial verschiebbaren Druckplatte beaufschlagbar ist, wobei der Bremsstator des Bremsgehäuses an dem Bremsgehäuse einstellbar angeordnet ist, und dass an der Außenfläche des Bremsgehäuses im Bereich des Bremsrotors eine Wartungsöffnung zur Ermittlung des Verschleißes des Bremsrotors ausgebildet ist. Erfindungsgemäß sind somit in dem Bremsgehäuse der Bremsrotor und die Druckplatte angeordnet und ist an dem Bremsgehäuse ein einstellbarer Bremsstator
angeordnet, an den der Bremsrotor mittels der Federeinrichtung in der Bremsstellung angedrückt wird. Die Wartungsöffnung bildet ein Fenster des Bremsgehäuses, durch das der Verschleiß des Bremsrotors auf einfache Weise und bei geringem Wartungsaufwand ermittelt werden kann. Durch die einstellbare Anordnung des Bremsstators kann bei geringem Wartungsaufwand durch Nachstellen des Bremsstators der Verschleiß des Bremsrotors kompensiert und ein entsprechendes Lüftspiel der Federspeicherbremse eingestellt werden.

Bevorzugt ist der Bremsrotor zwischen der Druckplatte und dem Bremsstator in dem Bremsgehäuse angeordnet. Hierdurch wird bei geringem Bauraumbedarf erzielt, dass der Bremsrotor von der federbeaufschlagten Druckplatte in der Bremsstellung der Federspeicherbremse an den Bremsstator gedrückt wird.

Der Bremsrotor ist gemäß einer vorteilhaften Ausgestaltungsform der Erfindung axial verschiebbar auf der Abtriebswelle des Elektromotors angeordnet. Dies ermöglicht es auf einfache Weise, dass der Bremsrotor von der federbeaufschlagten Druckplatte in der Bremsstellung der Federspeicherbremse an den Bremsstator des Bremsgehäuses in Anlage gebracht werden kann.

Gemäß einer bevorzugten Ausgestaltungsform der Erfindung ist der Bremsstator als Abschlussdeckel des Bremsgehäuses ausgebildet. Hierdurch wird eine gute und einfache Zugänglichkeit des Bremsstators erzielt, um diesen zum Ausgleich des Verschleißes des Bremsrotors einstellen und nachstellen zu können.

Besondere Vorteile ergeben sich, wenn gemäß einer Ausführungsform zwischen dem Bremsgehäuse und dem Bremsstator ein Gewinde ausgebildet ist, mittels dem der Bremsstator auf das Bremsgehäuse aufschraubbar ist. Der als Abschlussdeckel ausgebildete Bremsstator kann somit über das Gewinde direkt auf das Bremsgehäuse aufgeschraubt bzw. in das Bremsgehäuse eingeschraubt werden. Hierdurch wird eine einfache Wartung der Federspeicherbremseinrichtung erzielt, da bei einem Verschleiß des Bremsrotors durch entsprechendes Einschrauben des Bremsstators in das Bremsgehäuse die Federspeicherbremseinrichtung auf einfache Weise nachgestellt werden kann, um den Verschleiß des Bremsrotors zu kompensieren.

Besondere Vorteile ergeben sich, wenn gemäß einer Ausführungsform der Erfindung die Lüfteinrichtung und die Federeinrichtung im Bremsgehäuse angeordnet sind. Der als Abschlussdeckel des Bremsgehäuses ausgebildete Bremsstator begrenzt somit in dem Bremsgehäuse einen Einbauraum für die Lüfteinrichtung, die Federeinrichtung, die Druckplatte und den Bremsrotor der Federspeichereinrichtung. Hierdurch wird weiterhin bei entferntem Bremsstator eine einfache Montage und Demontage der Federspeicherbremseinrichtung erzielt.

Gemäß einer vorteilhaften Ausgestaltungsform der Erfindung ist die Federspeicherbremseinrichtung als elektrisch lösbare Federspeicherbremse ausgebildet, wobei die Lüfteinrichtung als Elektromagnet und die Druckplatte als Ankerplatte ausgebildet ist. Mit einer elektrisch lösbaren Federspeicherbremse, bei der der Elektromagnet in das Bremsgehäuse eingebaut ist, kann bei einem Fahrantrieb eines Flurförderzeugs mit geringem Bauaufwand und Bauraumbedarf eine Feststellbremse zur Verfügung gestellt werden.

Für den Einbau des Elektromagnet der Federspeicherbremseinrichtung in das Bremsgehäuse ergibt sich ein einfacher Bauaufwand, wenn gemäß einer Ausführungsform der Erfindung das Bremsgehäuse mit einer Ringnut versehen ist, in der eine Spule des Elektromagnet angeordnet ist.

Für die Federeinrichtung und den Einbau der Federeinrichtung der Federspeicherbremseinrichtung in das Bremsgehäuses ergibt sich ein einfacher Bauaufwand, wenn gemäß einer Ausführungsform der Erfindung die Federeinrichtung mehrere konzentrisch zur Abtriebswelle angeordnete Druckfedern aufweist, wobei das Bremsgehäuse für jede Druckfeder mit einer Aufnahmebohrung versehen ist.

Das Bremsgehäuse kann gemäß einer Ausführungsform der Erfindung an das Motorgehäuse des Fahrantriebs angebaut sein, in dem der Elektromotor angeordnet ist.

Gemäß einer vorteilhaften Ausführungsform der Erfindung ist das Bremsgehäuse von einem Motorgehäuse des Fahrantriebs gebildet, in dem der Elektromotor angeordnet ist. Die Federspeicherbremseinrichtung weist somit kein eigenständiges Bremsgehäuse auf, sondern ist in das Motorgehäuse des Fahrantriebs eingebaut. Hierdurch sind besondere Vorteile hinsichtlich einer bauraumsparenden Bauweise und eines kostengünstigen Aufbaus des Fahrantriebs erzielbar.

Gemäß einer besonders vorteilhaften Ausführungsform der Erfindung weist das Motorgehäuse einen Lagerschild auf, in dem die Abtriebswelle mittels einer Lagereinrichtung drehbar gelagert ist, und ist der Lagerschild als Bremsgehäuse ausgebildet. Die Federspeicherbremseinrichtung ist somit vollständig in den Lagerschild des Motorgehäuses und somit in das Motorgehäuse eingebaut und integriert. Dadurch ergibt sich eine bauraumsparende Bauweise und ein geringer Bauraumbedarf, da die Federspeicherbremseinrichtung kein eigenständiges Gehäuse benötigt, das an dem Motorgehäuse zu befestigen ist. Bei der erfindungsgemäßen Federspeicherbremseinrichtung wird in der Bremsstellung der axial verschiebbare Bremsrotor über die Druckplatte von der Federeinrichtung von Innen in Anlage an den Bremsstator gedrückt, der den Abschlussdeckel des Lagerschildes und somit des Motorgehäuses bildet. In der Bremsstellung der Federspeicherbremseinrichtung wird somit die von der Druckkraft der Federeinrichtung gebildete Bremskraft direkt an dem Bremsstator und somit am Motorgehäuse abgestützt, so dass die Lagereinrichtung der Abtriebswelle nicht von der Bremskraft beaufschlagt sind. Dadurch ergibt sich ein geringer Bauaufwand für die Lagereinrichtung, der zu weiteren Vorteilen hinsichtlich eines geringen Bauaufwandes und Bauraumbedarfs des Fahrantriebs führt.

Der Lagerschild kann hierbei einstückig mit dem Motorgehäuse ausgebildet sein oder als eigenständiges Bauteil ausgebildet sein, das an dem Motorgehäuse befestigt ist.

Vorteilhafterweise ist die Federspeicherbremseinrichtung als Feststellbremse des Flurförderzeugs ausgebildet.

Das Flurförderzeug ist als Lagertechnikflurförderzeug ausgebildet. Mit dem erfindungsgemäßen Fahrantrieb kann bei einem Lagertechnikflurförderzeug, beispielsweise einem Niederhubwagen, einem Hochhubwagen, einem Kommissionierer, einem Schubmaststapler, einem Regalstapler, einem Schmalgangstapler, oder einem Elektro-Schlepper, mit geringem Bauaufwand und Bauraumbedarf eine elektrisch lösbare Feststellbremse zur Verfügung gestellt werden, die einen geringen Wartungsaufwand aufweist und die gegebenenfalls in das Motorgehäuse des Fahrantriebs eingebaut und integriert werden kann.

Weitere Vorteile und Einzelheiten der Erfindung werden anhand des in der schematischen Figur dargestellten Ausführungsbeispiels näher erläutert.

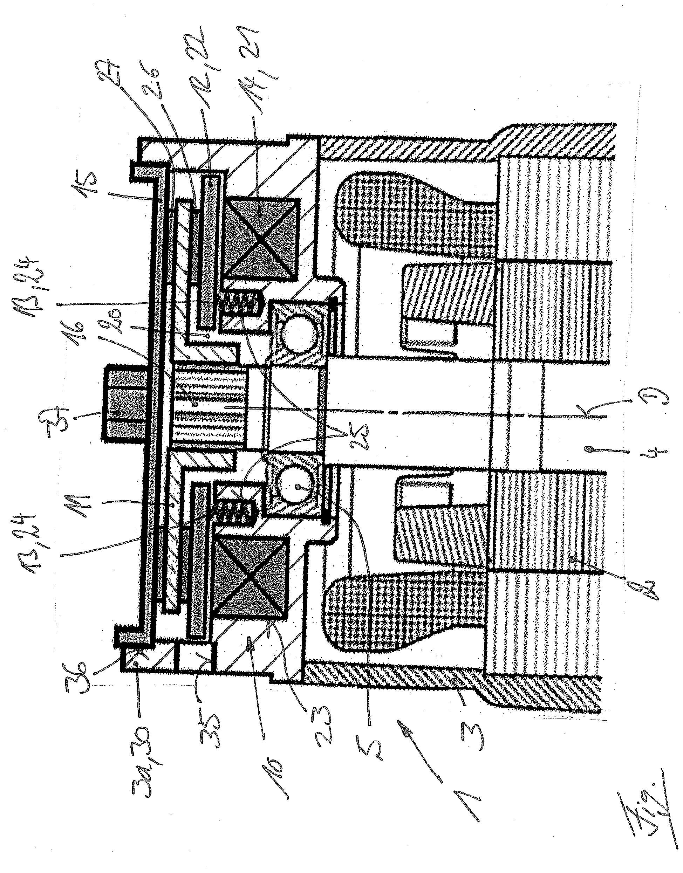

In der Figur ist ein erfindungsgemäßer Fahrantrieb 1 eines Flurförderzeugs, beispielsweise eines Lagertechnikflurförderzeugs, in einem Längsschnitt dargestellt.

Der Fahrantrieb 1 umfasst einen Elektromotor 2, der in einem Motorgehäuse 3 des Fahrantriebs 1 angeordnet ist. Der Elektromotor 2 umfasst eine Abtriebswelle 4, die im Motorgehäuse 3 mittels einer Lagereinrichtung 5 um eine Drehachse D drehbar gelagert ist. Die Lagereinrichtung 5 ist in einem Lagerschild 3a des Motorgehäuses 3 angeordnet. Die Lagereinrichtung 5 ist in dem dargestellten Ausführungsbeispiel als Wälzlager, beispielsweise Kugellager, ausgebildet. Die Abtriebswelle 4 steht in dem in der Figur unteren Bereich auf nicht näher dargestellte Weise mit einem Antriebsrad des Flurförderzeugs in trieblicher Verbindung, beispielsweise unter Zwischenschaltung eines Untersetzungsgetriebes. Das Untersetzungsgetriebe ist in einem Getriebegehäuse angeordnet, das an das Motorgehäuse 3 des Fahrantriebs 1 angebaut ist. Bei einem Lagertechnikflurförderzeug ist das Antriebsrad zudem lenkbar, wozu der Fahrantrieb 1 lenkbar an dem Flurförderzeug angeordnet sein kann.

Der Fahrantrieb 1 umfasst weiterhin eine Federspeicherbremseinrichtung 10, die auf die Abtriebswelle 4 des Elektromotors 1 wirkt. Die Federspeicherbremseinrichtung 10 weist die Funktion einer Feststellbremse auf, mit der das Flurförderzeug im Stillstand arretiert werden kann.

Die Federspeicherbremseinrichtung 10 weist ein Bremsgehäuse 30 auf, in dem ein mit der Abtriebswelle 4 drehfest verbundenen Bremsrotor 11, beispielsweise eine Bremsscheibe, und eine axial verschiebbare Druckplatte 12 der Federspeicherbremseinrichtung 10 angeordnet sind. Die Druckplatte 12 ist im Bremsgehäuse 30 drehfest befestigt und axial verschiebbar angeordnet. Die Druckplatte 12 ist von einer Federeinrichtung 13 in Richtung einer Bremsstellung der Federspeicherbremseinrichtung 10 beaufschlagt und von einer der Federeinrichtung entgegenwirkenden Lüfteinrichtung 14 in Richtung einer Lösestellung der Federspeicherbremseinrichtung 10 beaufschlagt.

Das Bremsgehäuse 30 der Federspeicherbremseinrichtung 10 ist weiterhin mit einem Bremsstator 15 versehen, an die der Bremsrotor 11 mittels der axial verschiebbaren Druckplatte 12 beaufschlagbar ist. Der Bremsstator 15 ist als Abschlussdeckel des Bremsgehäuses 30 ausgebildet, im dargestellten Ausführungsbeispiel als oberer Abschlussdeckel des Bremsgehäuses 30.

Der Bremsrotor 11 ist - in axialer Richtung der Drehachse D gesehen - zwischen der Druckplatte 12 und dem Bremsstator 15 im Bremsgehäuse 30 angeordnet und axial verschiebbar auf der Abtriebswelle 4 des Elektromotors 2 angeordnet. Zur drehfesten und axial verschiebbaren Anordnung des Bremsrotors 11 auf der Abtriebswelle 4 kann eine entsprechende Welle-Nabe-Verbindung 16 vorgesehen werden, beispielsweise eine Keilwellenverbindung.

Zwischen der Druckplatte 12 und dem Bremsrotor 11 ist ein Bremsbelag 26 angeordnet. Der Bremsbelag 26 kann an der Druckplatte 12 oder alternativ an dem Bremsrotor 11 befestigt sein. Zwischen dem Bremsrotor 11 und dem Bremsstator 15 ist ein weiterer Bremsbelag 27 angeordnet. Der Bremsbelag 27 kann an dem Bremsstator 15 oder alternativ an dem Bremsrotor 11 befestigt sein.

Das Bremsgehäuse 30 weist zur Aufnahme der Druckplatte 12 und des Bremsrotors 11 einen Aufnahmeraum 20 auf, in dem die axial verschiebbare Druckplatte 12 und der axial verschiebbare Bremsrotor 11 angeordnet und eingebaut sind. Der Aufnahmeraum 20 wird von dem als Abschlussdeckel des Bremsgehäuses 30 ausgebildeten Bremsstator 15 verschlossen.

Weiterhin sind die Lüfteinrichtung 14 und die Federeinrichtung 13 im Bremsgehäuse 30 des Elektromotors 2 angeordnet und eingebaut.

In dem dargestellten Ausführungsbeispiel ist die Federspeicherbremseinrichtung 10 als elektrisch lösbare Federspeicherbremse ausgebildet ist, wobei die Lüfteinrichtung 14 als Elektromagnet 21 und die Druckplatte 12 als Ankerplatte 22 ausgebildet ist. Der Elektromagnet 21 umfasst eine Spule, die in einer Ringnut 23 des Bremsgehäuses 30 angeordnet ist.

Die Federeinrichtung 13 ist in dem in der Figur dargestellten Ausführungsbeispiel von mehreren konzentrisch zur Abtriebswelle 4 angeordneten Druckfedern 24 gebildet, wobei das Bremsgehäuse 30 für jede Druckfeder 24 mit einer Aufnahmebohrung 25 versehen ist.

An der Außenfläche und somit in einer Seitenwand des Bremsgehäuses 30 ist im Bereich des Bremsrotors 11 eine Wartungsöffnung 35 ausgebildet. Über die Wartungsöffnung 35 wird es ermöglicht, den Verschleiß des in dem Bremsgehäuse 30 angeordneten Bremsrotors 11 und den Luftspalt der Federspeicherbremseinrichtung 10 zu ermitteln. Die Wartungsöffnung 35 ist bevorzugt von einem bohrungsförmigen oder schlitzförmigen Fenster in der Außenfläche, beispielsweise einer Seitenwand, des Lagerschildes 3a gebildet.

Der Bremsstator 15 ist an dem Bremsgehäuse 30 einstellbar angeordnet. Zwischen dem Bremsgehäuse 30 und dem Bremsstator 15 ist hierzu ein Gewinde 36 ausgebildet, mittels dem der als Abschlussdeckel ausgebildete Bremsstator 15 auf das Bremsgehäuse 30 aufschraubbar ist. Das Gewinde 36 ist von einem Innengewinde an einer Innenkante des Bremsgehäuses 30 und einem Außengewinde am Außenumfang des Bremsstators 15 gebildet. Durch entsprechendes Einschrauben des Bremsstators 15 in das Bremsgehäuse 30 mittels des Gewindes 36 wird es auf einfache Weise möglich, bei einem Verschleiß des Bremsrotors 11 den Bremsstator 15 nachzustellen, um den Verschleiß des Bremsrotors 11 zu kompensieren bzw. den Luftspalt der Federspeicherbremseinrichtung 10 einzustellen.

An der Oberseite des Bremsstators 15 kann hierzu eine Mutter 37 angeordnet werden, so dass es mit einem entsprechenden Werkzeug auf einfache Weise ermöglicht wird, den Bremsstator 15 über das Gewinde 36 in das Bremsgehäuse 30 einzuschrauben.

Im dargestellten Ausführungsbeispiel bildet der Lagerschild 3a des Motorgehäuses 3 des Fahrantriebs 1 das Bremsgehäuse 30 der Federspeicherbremseinrichtung 10. Die Federspeicherbremseinrichtung 10 ist somit in das Motorgehäuse 3 des Fahrantriebs 1 eingebaut.

Die Erfindung weist eine Reihe von Vorteilen auf.

Bei dem erfindungsgemäßen Fahrantrieb 1 drückt in der Bremsstellung der Federspeicherbremseinrichtung 10 die Federeinrichtung 13 über die Druckplatte 12 den axial verschiebbaren Bremsrotor 11 nach oben in Anlage an den am Bremsgehäuse 30 und somit am Motorgehäuse 3 befestigten und als Abschlussdeckel des Bremsgehäuses 30 ausgebildeten Bremsstator 15, so dass die von der Federeinrichtung 13 erzeugte Bremskraft über den Bremsstator 15 direkt in das Motorgehäuse 3 eingeleitet wird. Die Lagereinrichtung 5 im Lagerschild 3a ist somit nicht von der Bremskraft der Federeinrichtung 13 beaufschlagt.

Durch die Ausbildung des Bremsgehäuses 30 als Lagerschild 3a bzw. Motorgehäuse 3 und den Einbau der Federspeicherbremseinrichtung 10 in den Lagerschild 3a, bevorzugt in den oberen Lagerschild, und somit in das Motorgehäuse 3 des Fahrantriebs 1 wird ein in axialer Richtung kompakter Aufbau des Fahrantriebs 1 erzielt.

Durch die Wartungsöffnung 35 und die Nachstellbarkeit der Federspeicherbremseinrichtung 10 mittels des Gewindes 36 wird eine einfache Kontrolle des Verschleißes und des Luftspaltes der im Bremsgehäuse 30 eingebauten Federspeicherbremseinrichtung 10 und somit eine einfache Wartung und eine einfache Nachstellung der innerhalb des Bremsgehäuses 30 angeordneten Federspeicherbremseinrichtung 10 erzielt.

Zudem wird es ermöglicht, die zu dem Elektromotor 1 geführten elektrischen Verbindungskabel und das zu dem Elektromagnet 21 geführte Verbindungskabel an einem gemeinsamen Steckeranschluss am Motorgehäuse 3 zusammenzufassen. Hierdurch wird eine hohe Betriebssicherheit erzielt, da die elektrischen Verbindungkabel für den Elektromotor 2 und für die Federspeicherbremseinrichtung 10 vor Beschädigungen geschützt zu dem Steckeranschluss am Motorgehäuse 3 geführt werden können.

## Patentansprüche

1. Fahrantrieb (1) eines Flurförderzeugs mit einem Elektromotor (2), der eine Abtriebswelle (4) aufweist, und mit einer Federspeicherbremseinrichtung (10), die auf die Abtriebswelle (4) des Elektromotors (2) wirkt, wobei die Federspeicherbremseinrichtung (10) einen mit der Abtriebswelle (4) drehfest verbundenen Bremsrotor (11) und eine axial verschiebbare Druckplatte (12) aufweist, wobei die Druckplatte (12) von einer Federeinrichtung (13) in Richtung einer Bremsstellung der Federspeicherbremseinrichtung (10) und von einer der Federeinrichtung (13) entgegenwirkenden Lüfteinrichtung (14) in Richtung einer Lösestellung der Federspeicherbremseinrichtung (10) beaufschlagt ist, wobei die Federspeicherbremseinrichtung (10) ein Bremsgehäuse (30) aufweist, wobei in dem Bremsgehäuse (30) die Druckplatte (12) und der Bremsrotor (11) angeordnet sind, wobei das Bremsgehäuse (30) zur Aufnahme der Druckplatte (12) und des Bremsrotors (11) einen Aufnahmeraum (20) aufweist, in dem die Druckplatte (12) und der Bremsrotor (11) angeordnet und eingebaut sind, **dadurch gekennzeichnet, dass** das Bremsgehäuse (30) mit einem einstellbaren Bremsstator (15) der Federspeicherbremseinrichtung (10) versehen ist, gegen den der Bremsrotor (11) mittels der axial verschiebbaren Druckplatte (12) beaufschlagbar ist, wobei der Bremsstator (15) des Bremsgehäuses (30) an dem Bremsgehäuse (30) einstellbar angeordnet ist, und dass an der Außenfläche des Bremsgehäuses (30) im Bereich des Bremsrotors (11) eine Wartungsöffnung (35) zur Ermittlung des Verschleißes des Bremsrotors (11) ausgebildet ist.

2. Fahrantrieb nach Anspruch 1, **dadurch gekennzeichnet, dass** der Bremsrotor (11) zwischen der Druckplatte (12) und dem Bremsstator (15) in dem Bremsgehäuse (30) angeordnet ist.

3. Fahrantrieb nach Anspruch 1 oder 2, **dadurch gekennzeichnet, dass** der Bremsrotor (11) axial verschiebbar auf der Abtriebswelle (4) des Elektromotors (2) angeordnet ist.

4. Fahrantrieb nach einem der Ansprüche 1 bis 3, **dadurch gekennzeichnet, dass** der Bremsstator (15) als Abschlussdeckel des Bremsgehäuses (30) ausgebildet ist.

5. Fahrantrieb nach einem der Ansprüche 1 bis 4, **dadurch gekennzeichnet, dass** zwischen dem Bremsgehäuse (30) und dem Bremsstator (15) ein Gewinde (36) ausgebildet ist, mittels dem der Bremsstator (15) auf das Bremsgehäuse (30) aufschraubbar ist.

6. Fahrantrieb nach einem der Ansprüche 1 bis 5, **dadurch gekennzeichnet, dass** die Lüfteinrichtung (14) und die Federeinrichtung (13) im Bremsgehäuse (30) angeordnet sind.

7. Fahrantrieb nach einem der Ansprüche 1 bis 6, **dadurch gekennzeichnet, dass** die Federspeicherbremseinrichtung (10) als elektrisch lösbare Federspeicherbremse ausgebildet ist, wobei die Lüfteinrichtung (14) als Elektromagnet (21) und die Druckplatte (12) als Ankerplatte (22) ausgebildet ist.

8. Fahrantrieb nach Anspruch 7, **dadurch gekennzeichnet, dass** das Bremsgehäuse (30) mit einer Ringnut (23) versehen ist, in der eine Spule des Elektromagnet (21) angeordnet ist.

9. Fahrantrieb nach einem der Ansprüche 1 bis 8, **dadurch gekennzeichnet, dass** die Federeinrichtung (13) mehrere konzentrisch zur Abtriebswelle (4) angeordnete Druckfedern (24) aufweist, wobei das Bremsgehäuse (30) für jede Druckfeder (24) mit einer Aufnahmebohrung (25) versehen ist.

10. Fahrantrieb nach einem der Ansprüche 1 bis 9, **dadurch gekennzeichnet, dass** das Bremsgehäuse (30) an ein Motorgehäuse (3) des Fahrantriebs (1) angebaut ist, in dem der Elektromotor (2) angeordnet ist.

11. Fahrantrieb nach einem der Ansprüche 1 bis 9, **dadurch gekennzeichnet, dass** das Bremsgehäuse (30) von einem Motorgehäuse (3) des Fahrantriebs (1) gebildet ist, in dem der Elektromotor (2) angeordnet ist.

12. Fahrantrieb nach Anspruch 11, **dadurch gekennzeichnet, dass** das Motorgehäuse (3) einen Lagerschild (3a) aufweist, in dem die Abtriebswelle (4) mittels einer Lagereinrichtung (5) drehbar gelagert ist, und der Lagerschild (3a) als Bremsgehäuse (30) ausgebildet ist.

13. Fahrantrieb nach einem der Ansprüche 1 bis 12, **dadurch gekennzeichnet, dass** die Federspeicherbremseinrichtung (10) als Feststellbremse des Flurförderzeugs ausgebildet ist.

14. Fahrantrieb nach einem der Ansprüche 1 bis 13, **dadurch gekennzeichnet, dass** das Flurförderzeug als Lagertechnikflurförderzeug ausgebildet ist.

## Claims

1. Traction drive (1) of an industrial truck with an electric motor (2) which has an output shaft (4), and with a spring-loaded braking device (10) which acts on the output shaft (4) of the electric motor (2), wherein the spring-loaded braking device (10) has a brake rotor (11), which is connected to the output shaft (4) for rotation therewith, and an axially displaceable pressure plate (12), wherein the pressure plate (12) is acted upon by a spring device (13) in the direction of a braking position of the spring-loaded braking device (10) and by a release device (14), which acts counter to the spring device (13), in the direction of a release position of the spring-loaded braking device (10), wherein the spring-loaded braking device (10) has a brake housing (30), wherein the pressure plate (12) and the brake rotor (11) are arranged in the brake housing (30), wherein the brake housing (30) has, for receiving the pressure plate (12) and the brake rotor (11), a receiving space (20) in which the pressure plate (12) and the brake rotor (11) are arranged and installed, **characterized in that** the brake housing (30) is provided with an adjustable brake stator (15) of the spring-loaded braking device (10), against which the brake rotor (11) can be applied upon by means of the axially displaceable pressure plate (12), wherein the brake stator (15) of the brake housing (30) is arranged adjustably on the brake housing (30), and **in that** a maintenance opening (35) for determining the wear of the brake rotor (11) is configured on the outer surface of the brake housing (30) in the region of the brake rotor (11).

2. Traction drive according to Claim 1, **characterized in that** the brake rotor (11) is arranged between the pressure plate (12) and the brake stator (15) in the brake housing (30).

3. Traction drive according to Claim 1 or 2, **characterized in that** the brake rotor (11) is arranged in an axially displaceable manner on the output shaft (4) of the electric motor (2).

4. Traction drive according to one of Claims 1 to 3, **characterized in that** the brake stator (15) is configured as a closure cover of the brake housing (30).

5. Traction drive according to one of Claims 1 to 4, **characterized in that** a thread (36) which can be used to screw the brake stator (15) onto the brake housing (30) is configured between the brake housing (30) and the brake stator (15).

6. Traction drive according to one of Claims 1 to 5, **characterized in that** the release device (14) and the spring device (13) are arranged in the brake housing (30) .

7. Traction drive according to one of Claims 1 to 6, **characterized in that** the spring-loaded braking device (10) is configured as an electrically releasable spring-loaded brake, wherein the release device (14) is configured as an electromagnet (21) and the pressure plate (12) as an armature plate (22).

8. Traction drive according to Claim 7, **characterized in that** the brake housing (30) is provided with an annular groove (23) in which a coil of the electromagnet (21) is arranged.

9. Traction drive according to one of Claims 1 to 8, **characterized in that** the spring device (13) has a plurality of compression springs (24) arranged concentrically with respect to the output shaft (4), wherein the brake housing (30) is provided with a receiving bore (25) for each compression spring (24).

10. Traction drive according to one of Claims 1 to 9, **characterized in that** the brake housing (30) is attached to a motor housing (3) of the traction drive (1), in which motor housing the electric motor (2) is arranged.

11. Traction drive according to one of Claims 1 to 9, **characterized in that** the brake housing (30) is formed by a motor housing (3) of the traction drive (1), in which motor housing the electric motor (2) is arranged.

12. Traction drive according to Claim 11, **characterized in that** the motor housing (3) has an end shield (3a) in which the output shaft (4) is mounted rotatably by means of a bearing device (5), and the end shield (3a) is configured as a brake housing (30).

13. Traction drive according to one of Claims 1 to 12, **characterized in that** the spring-loaded braking device (10) is configured as a parking brake of the industrial truck.

14. Traction drive according to one of Claims 1 to 13, **characterized in that** the industrial truck is configured as an industrial truck for storage techniques.

## Revendications

1. Entraînement de conduite (1) d'un chariot de manutention comprenant un moteur électrique (2) qui présente un arbre de sortie (4), et comprenant un dispositif de freinage à ressort accumulateur (10) qui agit sur l'arbre de sortie (4) du moteur électrique (2), le dispositif de freinage à ressort accumulateur (10) présentant un rotor de frein (11) connecté de manière solidaire en rotation à l'arbre de sortie (4) et présentant une plaque de pression déplaçable axialement (12), la plaque de pression (12) étant sollicitée par un dispositif à ressort (13) dans la direction d'une position de freinage du dispositif de freinage à ressort accumulateur (10) et par un dispositif releveur (14) s'opposant au dispositif à ressort (13) dans la direction d'une position de desserrage du dispositif de freinage à ressort accumulateur (10), le dispositif de freinage à ressort accumulateur (10) présentant un boîtier de frein (30), la plaque de pression (12) et le rotor de frein (11) étant disposés dans le boitîer de frein (30) le boîtier de frein (30) présentant, pour recevoir la plaque de pression (12) et le rotor de frein (11), un espace de réception (20), dans lequel sont disposés et installés la plaque de pression (12) et le rotor de frein (11), **caractérisé en ce que** le boîtier de frein (30) est pourvu d'un stator de frein ajustable (15) du dispositif de freinage à ressort accumulateur (10), contre lequel le rotor de frein (11) peut être sollicité au moyen de la plaque de pression déplaçable axialement (12), le stator de frein (15) du boîtier de frein (30) étant disposé au niveau du boîtier de frein (30) de manière ajustable, et **en ce qu'**une ouverture d'entretien (35) pour déterminer l'usure du rotor de frein (11) est réalisée au niveau de la surface extérieure du boîtier de frein (30) dans la région du rotor de frein (11).

2. Entraînement de conduite selon la revendication 1, **caractérisé en ce que** le rotor de frein (11) est disposé entre la plaque de pression (12) et le stator de frein (15) dans le boîtier de frein (30).

3. Entraînement de conduite selon la revendication 1 ou 2, **caractérisé en ce que** le rotor de frein (11) est disposé de manière déplaçable axialement sur l'arbre de sortie (4) du moteur électrique (2).

4. Entraînement de conduite selon l'une quelconque des revendications 1 à 3, **caractérisé en ce que** le stator de frein (15) est réalisé sous forme de couvercle de terminaison du boîtier de frein (30).

5. Entraînement de conduite selon l'une quelconque des revendications 1 à 4, **caractérisé en ce qu'**entre le boîtier de frein (30) et le stator de frein (15) est réalisé un filetage (36) au moyen duquel le stator de frein (15) peut être vissé sur le boîtier de frein (30).

6. Entraînement de conduite selon l'une quelconque des revendications 1 à 5, **caractérisé en ce que** le dispositif releveur (14) et le dispositif à ressort (13) sont disposés dans le boîtier de frein (30).

7. Entraînement de conduite selon l'une quelconque des revendications 1 à 6, **caractérisé en ce que** le dispositif de freinage à ressort accumulateur (10) est réalisé sous forme de frein à ressort accumulateur desserrable électriquement, le dispositif releveur (14) étant réalisé sous forme d'électroaimant (21) et la plaque de pression (12) étant réalisée sous forme de plaque d'induit (22).

8. Entraînement de conduite selon la revendication 7, **caractérisé en ce que** le boîtier de frein (30) est pourvu d'une rainure annulaire (23) dans laquelle est disposée une bobine de l'électroaimant (21).

9. Entraînement de conduite selon l'une quelconque des revendications 1 à 8, **caractérisé en ce que** le dispositif à ressort (13) présente plusieurs ressorts de compression (24) disposés concentriquement par rapport à l'arbre de sortie (4), le boîtier de frein (30) étant pourvu d'un alésage de réception (25) pour chaque ressort de compression (24).

10. Entraînement de conduite selon l'une quelconque des revendications 1 à 9, **caractérisé en ce que** le boîtier de frein (30) est monté sur un carter moteur (3) de l'entraînement de conduite (1) dans lequel est disposé le moteur électrique (2) .

11. Entraînement de conduite selon l'une quelconque des revendications 1 à 9, **caractérisé en ce que** le boîtier de frein (30) est formé par un carter moteur (3) de l'entraînement de conduite (1), dans lequel est disposé le moteur électrique (2) .

12. Entraînement de conduite selon la revendication 11, **caractérisé en ce que** le carter moteur (3) présente un flasque de palier (3a) dans lequel l'arbre de sortie (4) est supporté à rotation au moyen d'un système de palier (5), et le flasque de palier (3a) est réalisé sous forme de boîtier de frein (30).

13. Entraînement de conduite selon l'une quelconque des revendications 1 à 12, **caractérisé en ce que** le dispositif de freinage à ressort accumulateur (10) est réalisé sous forme de frein de stationnement du chariot de manutention.

14. Entraînement de conduite selon l'une quelconque des revendications 1 à 13, **caractérisé en ce que** le chariot de manutention est réalisé sous forme de chariot de manutention pour technique de stockage.
